# EUROPEAN PATENT SPECIFICATION

(11) **EP 1 961 218 B1**
(45) Date of publication and mention of the grant of the patent: **03.07.2013**
(21) Application number: 06812461.9
(22) Date of filing: 07.11.2006
(51) Int. Cl.: H04N 5/45

(54) **DISPLAY APPARATUS AND METHOD AND INFORMATION PROCESSING APPARATUS AND METHOD FOR PROVIDING PICTURE IN PICTURE FUNCTION**
DISPLAY-VORRICHTUNG UND VERFAHREN UND INFORMATIONSVERARBEITUNGSVORRICHTUNG UND VERFAHREN ZUM BEREITSTELLEN EINER BILD-IM-BILD-FUNKTION
APPAREIL ET PROCEDE D'AFFICHAGE ET APPAREIL ET PROCEDE DE TRAITEMENT D'INFORMATIONS PROPOSANT UNE FONCTION D'INCRUSTATION D'IMAGE

(30) Priority: 12.12.2005 KR 20050121899
(43) Date of publication of application: 27.08.2008
(73) Proprietor: Samsung Electronics Co., Ltd., Suwon-si, Gyeonggi-do, 443-742 (KR)
(72) Inventor: JIN, Ho, Gyeonggi-do 448-514 (KR); CHO, Jung-Yon, Gyeonggi-do 443-744 (KR); KIM, Yong-Jun, Gyeonggi-do 448-529 (KR)
(74) Representative: Davies, Robert Ean
(86) International application number: PCT/KR2006/004625
(87) International publication number: WO 2007/069824

(56) References cited:
- EP-A- 1 404 130
- WO-A-01/93008
- KR-A- 20050 066 681
- US-A1- 2001 012 022
- US-A1- 2002 070 957
- US-A1- 2002 075 407
- US-A1- 2003 208 751

## Description

### Technical Field

The present invention relates to a display apparatus and method and an information processing apparatus and method for providing a picture in picture (PIP) function.

### Background Art

With the development of monitors, various functions have been added to a function of displaying a screen of a personal computer (PC). As motion picture technology and display equipment have been developed, a PIP function has been in the limelight as a diverse screen display method in monitors. The PIP function superimposes a small screen on a large screen in a display apparatus to provide contents of two programs.

In conventional monitors, according a user's input of PIP ON/OFF, the PIP function displays a new screen in a PIP region on an entire screen of a monitor. In other words, when the user selects a PIP source and the PIP ON, a PIP source screen is displayed in the PIP region on a PC screen displayed on an entire monitor. A PC picture and a video/TV picture received through an external port may be displayed on the PIP source screen using diverse video signals connected to the monitor.

EP 1404 130A discloses a display with a picture in picture (PIP) system, where the PIP can be displayed either in an opaque or in a semi-transparent state.

US 2001/012022A1 discloses a display screen, where application control buttons can be displayed in a semi-transparent way and become opaque when the (mouse) pointer is moved over them.

WO 01/93008A discloses a graphical user interface, where semi-transparent buttons become opaque when the mouse pointer is moved over them.

### Disclosure of Invention

### Technical Problem

The PIP function allows a user to watch a new picture/screen in a PIP region on an existing screen of a monitor. However, a part of the existing screen corresponding to the PIP region is hidden and not shown to the user. When a small screen is displayed by the PIP function while the user is doing PC work on the entire monitor screen, the user must turn off the PIP function to check PC work information displayed on a part of the entire monitor screen hidden by the PIP region, which is inconvenient.

### Technical Solution

The present invention provides a display apparatus and method and an information processing apparatus and method, by which a picture in picture (PIP) region is automatically and freely changed between a semi-transparent state and an opaque state according to a position of a pointing device while a PIP function is operating, thereby increasing a user's convenience.

### Advantageous Effects

According to the present invention, a PIP region of a display apparatus is automatically changed into a semi-transparent state according to a user's need so that both of PIP information and information of a background screen can be efficiently shared.

### Description of Drawings

FIG. 1 illustrates a system including a display apparatus and an information processing apparatus which realize a picture in picture (PIP) function according to an embodiment of the present invention;

FIG. 2 is a schematic block diagram of the display apparatus shown in FIG. 1;

FIG. 3 is a schematic block diagram of the information processing apparatus shown in FIG. 1;

FIG. 4 is a flowchart of the operations of the display apparatus shown in FIG. 2;

FIG. 5 is a flowchart of the operations of the information processing apparatus shown in FIG. 3;

FIG. 6 is a block diagram of an information processing apparatus according to another embodiment of the present invention; and

FIG. 7 is a flowchart of the operation of the information processing apparatus shown in FIG. 6.

### Best Mode

According to an aspect of the present invention, there is provided a display apparatus for providing a PIP function, including a communicator transmitting PIP information to an information processing apparatus and receiving transparency information set according to whether a pointing device is positioned within a PIP region from the information processing apparatus; and a controller receiving the transparency information from the communicator and changing a screen of the PIP region into a semi-transparent state or an opaque state according to an enable/disable state of the transparency information.

The controller may change the screen of the PIP region into the semi-transparent state when the transparency information is in the enable state and changes the screen of the PIP region into the opaque state when the transparency information is in the disable state.

According to another aspect of the present invention, there is provided an information processing apparatus for providing a PIP function, including a communicator receiving position information of a PIP region from a display apparatus and transmitting transparency information, which changes a screen of the PIP region into a semi-transparent state or an opaque state according to whether a pointing device is positioned within the PIP region, to the display apparatus; and a PIP monitoring unit setting a state of the transparency information according to whether the pointing device is positioned within the PIP region.

The information processing apparatus may further include a pointing device manager monitoring a position of the pointing device and providing position information of the pointing device to the PIP monitoring unit.

The PIP monitoring unit may set the transparency information to an enable state when the pointing device is positioned within the PIP region and set the transparency information to a disable state when the pointing device is not positioned within the PIP region.

The communicator may transmit the transparency information to the display apparatus when the state of the transparency information is changed.

According to still another aspect of the present invention, there is provided an information processing apparatus for providing a PIP function, including a controller setting transparency information, which changes a screen of a PIP region into a semi-transparent state or an opaque state according to whether a pointing device is positioned within the PIP region, and controlling a display unit to make the screen of the PIP region be semi-transparent when the transparency information is set to an enable state and be opaque when the transparency information is set to a disable state; and the display unit outputting the screen of the PIP region in the semi-transparent state or the opaque state according to the enable/disable state of the transparency information.

According to yet another aspect of the present invention, there is provided a display method for providing a PIP function, including transmitting PIP information to an information processing apparatus, receiving transparency information set according to whether a pointing device is positioned within a PIP region from the information processing apparatus, and displaying a screen of the PIP region in a semi-transparent state or an opaque state according to an enable/disable state of the transparency information.

According to a further aspect of the present invention, there is provided an information processing method for providing a PIP function, including receiving position information of a PIP region from a display apparatus; setting transparency information, which changes a screen of the PIP region into a semi-transparent state or an opaque state according to whether a pointing device is positioned within the PIP region; and transmitting the set transparency information to the display apparatus.

According to another aspect of the present invention, there is provided an information processing method for providing a PIP function, including setting transparency information, which changes a screen of a PIP region into a semi-transparent state or an opaque state according to whether a pointing device is positioned within the PIP region; and controlling a display unit to make the screen of the PIP region be semi-transparent when the transparency information is set to an enable state and be opaque when the transparency information is set to a disable state.

### Mode for Invention

Hereinafter, the present invention will be described in detail by explaining preferred embodiments of the invention with reference to the attached drawings. Like reference numerals in the drawings denote like elements.

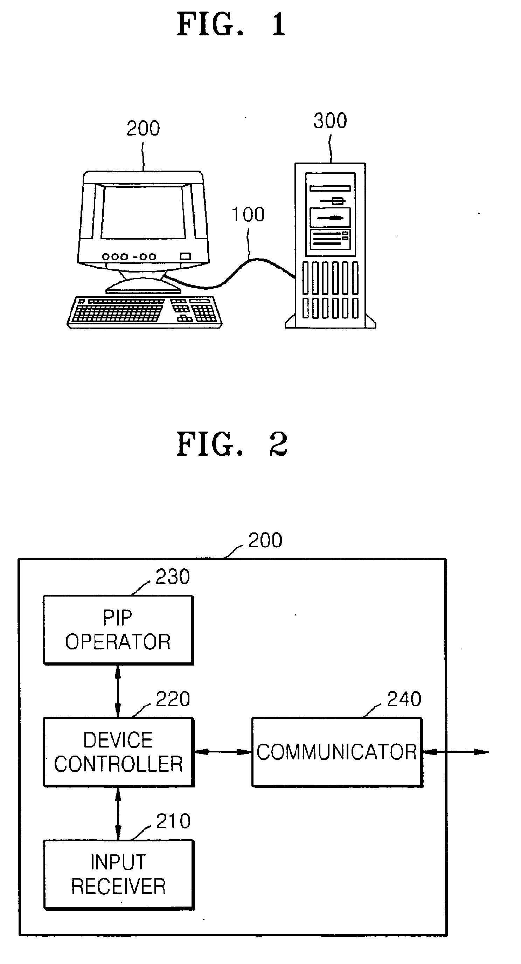

FIG. 1 illustrates a system including a display apparatus and an information processing apparatus which realize a picture in picture (PIP) function according to an embodiment of the present invention. Referring to FIG. 1, the system includes a display apparatus 200 outputting information or video data to a user, an information processing apparatus 300 providing the information or the video data to be output by the display apparatus 200, and a communication medium 100 performing communication between the display apparatus 200 and the information processing apparatus 300.

The display apparatus 200 is provided with the PIP function. The display apparatus 200 provides PIP information to the information processing apparatus 300 through the communication medium 100, receives control information for making a PIP region semi-transparent or opaque from the information processing apparatus 300, and processes a screen in the PIP region.

The information processing apparatus 300 receives the PIP information from the display apparatus 200, continuously monitors a position of a pointing device to determine whether the position of the pointing device overlaps with the PIP region, and provides the control information for making the PIP region semi-transparent/opaque to the display apparatus 200. The display apparatus 200 and the information processing apparatus 300 will be described in detail later.

The communication medium 100 transfers video and data between the display apparatus 200 and the information processing apparatus 300. When a video cable serving as the communication medium 100 supports both of video and data, that is, when the video cable supports transmission of data as well as video signals like high-definition multimedia interface (HDMI) or a display port, additional devices are not necessary. When the video cable supports video only, RGB or digital video interface (DVI) may be used. In other words, when a cable transmitting/receiving only video is used, additional communication devices are needed for data communication. Data communication for device control between a monitor and a personal computer (PC) may be performed using inexpensive RS-232 or Bluetooth supporting wireless communication. Bluetooth is used for communication in a keyboard and a mouse of a PC, external devices of the PC, etc.

When the video cable supports both of video and data transmissions, an existing communication module is used as it is. However, when the video cable supports video transmission only, an additional communication module is needed. A communication medium such as RS-232 or Bluetooth may be used as the additional communication module. With respect to a PC, the communication medium may operate as an external device. When a mouse or a keyboard includes a communication device, monitor control information and semi-transparent/opaque information may be transmitted and received using a communication module of the mouse or the keyboard.

Accordingly, with respect to a PC, a method of using a communication module may be different according to a type of communication medium. When a monitor is connected with a PC, they perform device recognition with respect to each other. A transmission mode is different according to a connection medium.

In case of HDMI/display port, a monitor and a PC share each other's device information. In case of Bluetooth, after monitor setup, authentication is performed every time when the monitor and the PC are connected with each other. After the authentication, the monitor and the PC share each other's device information. In case of RS-232, when the monitor is turned on, the monitor requests an Ack indicating that the PC can transmit data from the PC. The PC transmits the Ack and simultaneously requests an Ack indicating that the monitor can transmit data from the monitor. The monitor transmits the Ack indicating that it can transmit data to the PC and simultaneously requests data from the PC. Upon receiving the Ack from the monitor, the PC starts data transmission.

The present invention is not restricted to a monitor but may be used for a display apparatus such as a digital television (DTV) serving as a monitor. The present invention is suggested to maximize the PIP function provided by many monitors. Most of users using the PIP function work on monitors and use the PIP function to watch video or watch different UIs at one time. While using the PIP function, it may be needed to view a portion hidden by a PIP region. Conventionally, there is no way to view information hidden by the PIP region other than inputting PIP OFF or changing the position of the PIP region.

The present invention automatically changes the PIP region into a semi-transparent state when a user's pointing device is positioned on the PIP region so that the user can view both of information provided through the PIP function and information hidden by the PIP region while using the PIP function.

FIG. 2 is a schematic block diagram of the display apparatus 200 shown in FIG. 1. Referring to FIG. 2, the display apparatus 200 includes an input receiver 210, a device controller 220, a PIP operator 230, and a communicator 240.

The input receiver 210 receives a PIP ON/OFF command and a menu input by a user. The device controller 220 controls the overall function of the display apparatus 200. The device controller 220 performs a menu function of the display apparatus 200 such as a PIP ON/OFF menu function based on the user's input. In particular, the device controller 220 performs a PIP transparency/opacity function according to a PIP transparency enable/disable command sent by the information processing apparatus 300. The PIP operator 230 turns ON or OFF the PIP function according the user's input. The communicator 240 transmits display device information to the information processing apparatus 300 and receives device information of the information processing apparatus 300 to recognize the information processing apparatus 300. In particular, the communicator 240 provides PIP information to the information processing apparatus 300 according to the user's selection of the PIP ON/OFF. The PIP information includes PIP ON/OFF information and position information (X, Y, width, height) of the PIP region. In addition, the communicator 240 receives PIP transparency enable/disable information and diverse display control information from the information processing apparatus 300.

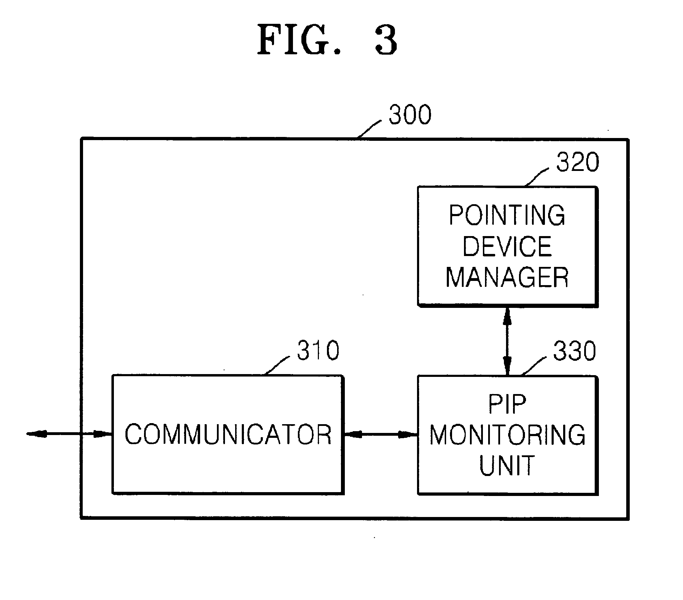

FIG. 3 is a schematic block diagram of the information processing apparatus 300 shown in FIG. 1. Referring to FIG. 3, the information processing apparatus 300 includes a communicator 310, a pointing device manager 320, and a PIP monitoring unit 330.

The communicator 310 receives PIP ON/OFF information and position information of the PIP region from the display apparatus 200 and transmits display control information to the display apparatus 200. The pointing device manager 320 provides current position information of a pointing device to the PIP monitoring unit 330. In most of PCs, a mouse is used as the pointing device. The PIP monitoring unit 330 performs PIP monitoring when receiving PIP ON information from the display apparatus 200. In a PIP ON state, the PIP monitoring unit 330 receives PIP region information from the display apparatus 200 and position information of the pointing device continuously monitored by the pointing device manager 320 and compares the position of the PIP region with the position of the pointing device. In other words, in the PIP ON state, the PIP monitoring unit 330 continuously receives coordinates of a current position of the pointing device from the pointing device manager 320 and monitors whether the PIP region information overlaps with the position of the pointing device. When the pointing device is positioned in the PIP region, the PIP monitoring unit 330 transmits transparency enable information to the display apparatus 200. The transparency enable information may not be continuously transmitted while the pointing device is in the PIP region but may be transmitted to the display apparatus 200 only when transparency enable/disable information changes.

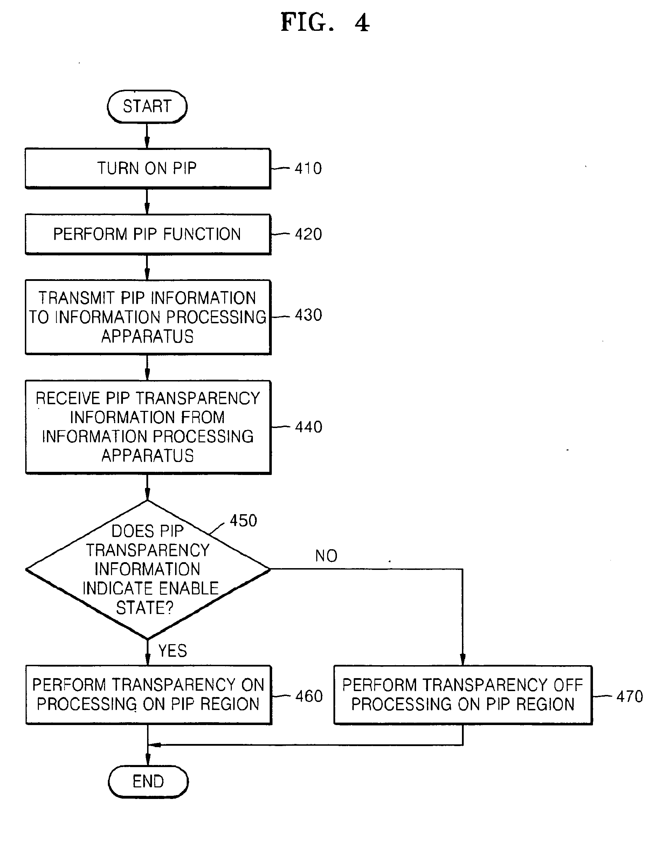

FIG. 4 is a flowchart of the operations of the display apparatus 200 shown in FIG. 2. Referring to FIG. 4, when the PIP function is turned ON by a user's input in the display apparatus 200 in operation 410, the display apparatus 200 performs the PIP function in operation 420.

Next, the display apparatus 200 transmits PIP information including PIP ON/OFF information and PIP region information to the information processing apparatus 300 in operation 430. The PIP information may have the following format:

Boolean PIPON = True;

Unsigned Int X = 10: //horizontal start point of PIP region

Unsigned Int Y = 10; //vertical start point of PIP region

Unsigned Int W = 100; //horizontal end point of PIP region

Unsigned Int H = 100; //vertical end point of PIP region

Send(PIPON, X, Y, W, H);.

After transmitting such PIP information to the information processing apparatus 300, the display apparatus 200 receives PIP transparency information based on whether the position of a pointing device overlaps with the PIP region from the information processing apparatus 300 in operation 440.

The display apparatus 200 determines whether the PIP transparency information indicates an enable state in operation 450. When the PIP transparency information is determined as indicating the enable state, the display apparatus 200 makes the PIP region semi-transparent through transparency ON processing in operation 460. When the PIP transparency information is determined as indicating the disable state, the display apparatus 200 makes the PIP region opaque through transparency OFF processing in operation 470.

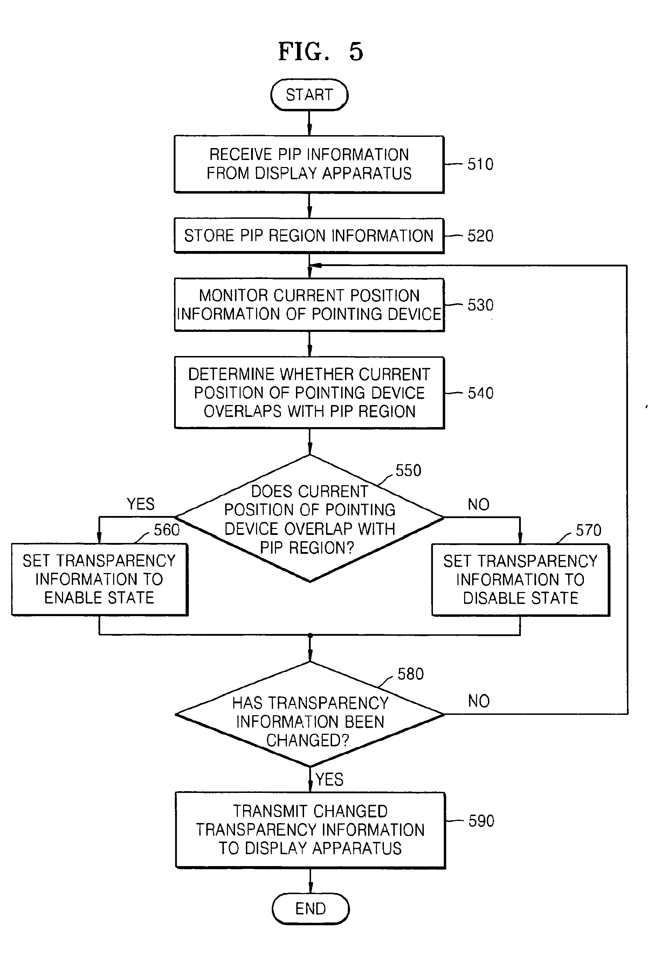

FIG. 5 is a flowchart of the operations of the information processing apparatus 300 shown in FIG. 3. Referring to FIG. 5, the information processing apparatus 300 receives PIP information including PIP ON/OFF information and PIP region information from the display apparatus 200 in operation 510 and stores the PIP region information in operation 520.

The information processing apparatus 300 monitors current position information of a pointing device in operation 530 and determines whether a current position of the pointing device overlaps with a PIP region in operation 540. The following is an exemplary program for determining whether the current position of the pointing device overlaps with the PIP region:

Boolean PIP_Transparency_Enable = True;

Send(PIP_Transparency_Enable);

Unsigned Int X = 10: //horizontal start point of received PIP region

Unsigned Int Y = 10; //vertical start point of received PIP region

Unsigned Int W = 100; //horizontal end point of received PIP region

Unsigned Int H = 100; //vertical end point of received PIP region

X1 = 15; //current X coordinate of pointing device

Y1 = 30; //current Y coordinate of pointing device

if((X <= X1 <= (X+W)) &&

(Y <= Y1 <= (Y+H))

{

There is overlap!!!

Transparency Enable

}

else

{

There is no overlap!!!

Transparency Disable

}

In the above example, since (10 <= 15 <= 100) && (10 <= 30 <= 100), it is determined that the PIP region overlaps with the position of the pointing device.

When it is concluded that the current position of the pointing device overlaps with the PIP region in operation 550, the information processing apparatus 300 sets the transparency information to an enable state in operation 560. When it is concluded that the current position of the pointing device does not overlap with the PIP region in operation 550, the information processing apparatus 300 sets the transparency information to a disable state in operation 570.

Next, the information processing apparatus 300 checks whether the transparency information has been changed in operation 580. When it is determined that the transparency information has been changed, the information processing apparatus 300 transmits the transparency information to the display apparatus 200 through the communicator 310 in operation 590. When it is determined that the transparency information has not been changed, the information processing apparatus 300 goes back to operation 530 to monitor the position information of the pointing device.

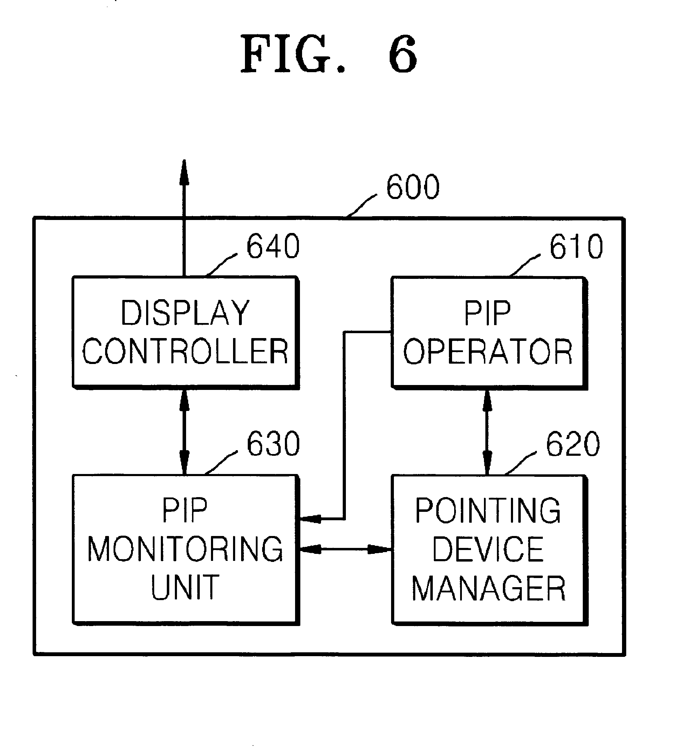

FIG. 6 is a block diagram of an information processing apparatus 600 according to another embodiment of the present invention. A PIP transparency ON/OFF function according to the present invention may be used in a laptop computer such as a notebook computer. For example, when watching a TV program in a notebook computer using digital multimedia broadcasting (DMB) in a PIP mode, a control unit of the notebook computer may compare a PIP region and a position of a pointing device and make the PIP region semi-transparent or opaque. Since most of notebook computers support PIP in an application, transparency control according to an embodiment of the present invention can be performed using an application associating a PIP operator, a PIP monitoring unit, and a pointing device manager with a display controller.

Referring to FIG. 6, the information processing apparatus 600 includes a PIP operator 610, a pointing device manager 620, a PIP monitoring unit 630, and a display controller 640.

The PIP operator 610 performs the PIP function when a PIP ON command is input by a user and provides information indicating that the PIP function has been turned ON and PIP region information to the PIP monitoring unit 630.

The pointing device manager 620 continuously monitors current position information of a pointing device and provides the current position information to the PIP monitoring unit 630.

The PIP monitoring unit 630 receives the PIP ON information and the PIP region information from the PIP operator 610, continuously receives the current position information of the pointing device from the pointing device manager 620, determines whether a position of the pointing device overlaps with a PIP region, sets transparency information to an enable state when they overlap with each other, and sets the transparency information to a disable state when they do not overlap. When the transparency information is changed as the result of the setting, the PIP monitoring unit 630 transmits the changed transparency information to the display controller 640.

The display controller 640 receives the changed transparency information. When the changed transparency information indicates the enable state, the display controller 640 controls such that an image is output in a semi-transparent state in the PIP region. When the changed transparency information indicates the disable state, the display controller 640 controls such that an image is output in an opaque state in the PIP region.

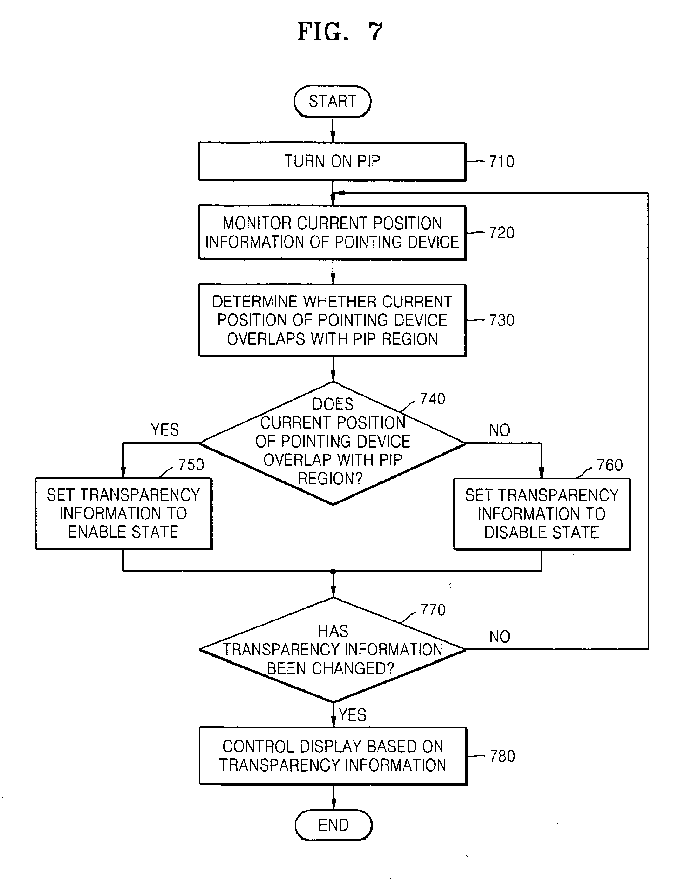

FIG. 7 is a flowchart of the operation of the information processing apparatus 600 shown in FIG. 6. When the PIP function is turned ON in the information processing apparatus 600 in operation 710, current position information of a pointing device is monitored in operation 720.

The information processing apparatus 600 determines whether a current position of the pointing device overlaps with a PIP region in operation 730. When it is concluded that the current position of the pointing device overlaps with the PIP region in operation 740, the information processing apparatus 600 sets transparency information to an enable state in operation 750. When it is concluded that the current position of the pointing device does not overlap with the PIP region in operation 740, the information processing apparatus 600 sets transparency information to a disable state in operation 760.

Next, the information processing apparatus 600 checks whether the transparency information has been changed in operation 770. When the transparency information has been changed, the information processing apparatus 600 controls display based on the changed transparency information in operation 780. When the transparency information has not been changed, the information processing apparatus 600 goes back to operation 720 to monitor the current position information of the pointing device.

A method of performing a PIP function according to the present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

While this invention has been particularly shown and described with reference to preferred embodiments thereof, it will be understood by those skilled in the art that various changes in form and details may be made therein without departing from the scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. : A display apparatus for providing a picture in picture (PIP) function, comprising:
a communicator transmitting PIP information including PIP ON/OFF information and PIP region information to an information processing apparatus and receiving transparency information set according to whether a pointing device is positioned within a PIP region from the information processing apparatus; and
a controller receiving the transparency information from the communicator and changing a screen of the PIP region from an opaque state into a semi-transparent state when the transparency information is in an enable state,
wherein the transparency information is set to the enable state when the pointing device is positioned within the PIP region

2. : The display apparatus of claim 1, wherein the controller changes the screen of the PIP region from the semi-transparent state into the opaque state when the transparency information is in the disable state,
wherein the transparency information is set to a disable state when the pointing device is not positioned within the PIP region.

3. : An information processing apparatus for providing a picture in picture (PIP) function, comprising:
a communicator receiving position information of a PIP region from a display apparatus and transmitting transparency information, which changes a screen of the PIP region into a semi-transparent state according to whether a pointing device is positioned within the PIP region, to the display apparatus; and
a PIP monitoring unit setting a state of the transparency information according to whether the pointing device is positioned within the PIP region
wherein the transparency information is set to the enable state when the pointing device is positioned within the PIP region and the screen of the PIP region is changed from an opaque state into the semi-transparent state when the transparency information is in the enable state.

4. : The information processing apparatus of claim 3, further comprising a pointing device manager monitoring a position of the pointing device and providing position information of the pointing device to the PIP monitoring unit.

5. : The information processing apparatus of claim 3, wherein the PIP monitoring unit sets the transparency information to a disable state when the pointing device is not positioned within the PIP region and the screen of the PIP region is changed from the semi-transparent state into the opaque state when the transparency information is in the disable state.

6. : The information processing apparatus of claim 3, wherein the communicator transmits the transparency information to the display apparatus when the state of the transparency information is changed.

7. : The information processing apparatus of claim 5 further comprising:
a controller setting transparency information, which changes a screen of a PIP region into a semi-transparent state or an opaque state according to whether a pointing device is positioned within the PIP region, and controlling a display unit to make the screen of the PIP region be semi-transparent when the transparency information is set to an enable state and be opaque when the transparency information is set to a disable state; and
the display unit outputting the screen of the PIP region in the semi-transparent state or the opaque state according to the enable/disable state of the transparency information.

8. : A display method for providing a picture in picture (PIP) function, comprising:
transmitting PIP information including PIP ON/OFF information and PIP region information to an information processing apparatus;
receiving transparency information set according to whether a pointing device is positioned within a PIP region from the information processing apparatus; and
changing a screen of the PIP region from an opaque state into a semi-transparent state when the transparency information is in an enable state,.
wherein the transparency information is set to the enable state when the pointing device is positioned within the PIP region

9. : The display method of claim 8, wherein the changing of the screen of the PIP region from the semi-transparent state into the opaque state occurs when the transparency information is in the disable state,
wherein the transparency information is set to the disable state when the pointing device is not positioned within the PIP region

10. : An information processing method for providing a picture in picture (PIP) function, comprising:
receiving position information of a PIP region from a display apparatus;
setting transparency information, which changes a screen of the PIP region into a semi-transparent state according to whether a pointing device is positioned within the PIP region; and
transmitting the set transparency information to the display apparatus,
wherein the transparency information is set to the enable state when the pointing device is positioned within the PIP region and the screen of the PIP region is changed from an opaque state into the semi-transparent state when the transparency information is in the enable state.

11. The information processing method of claim 10, wherein the setting of the transparency information comprises continuously monitoring a position of the pointing device and providing position information of the pointing device.

12. : The information processing method of claim 10, comprising setting the transparency information to a disable state when the pointing device is not positioned within the PIP region and the screen of the PIP region is changed from the semi-transparent state into the opaque state when the transparency information is in the disable state.

13. : The information processing method of claim 10, wherein the transmitting of the set transparency information comprises transmitting the transparency information to the display apparatus when the state of the transparency information is changed.

14. : The information processing method of claim 12, comprising:
setting transparency information, which changes a screen of a PIP region into a semi-transparent state or an opaque state according to whether a pointing device is positioned within the PIP region; and
controlling a display unit to make the screen of the PIP region be semi-transparent when the transparency information is set to an enable state and be opaque when the transparency information is set to a disable state.

## Patentansprüche

1. Display-Vorrichtung zum Bereitstellen einer Bild-im-Bild(PIP)-Funktion, aufweisend:
eine Kommunikationsvorrichtung, die PIP-Informationen, welche PIP-EIN-/AUS-Informationen und PIP-Regionsinformationen aufweisen, an eine Informationsverarbeitungsvorrichtung sendet und Transparenzinformationen, die demgemäß festgelegt sind, ob eine Zeigevorrichtung innerhalb einer PIP-Region positioniert ist, von der Informationsverarbeitungsvorrichtung empfängt; und
eine Steuerung, welche die Transparenzinformationen von der Kommunikationsvorrichtung empfängt und einen Bildschirm der PIP-Region von einem opaken Zustand in einen semitransparenten Zustand wechselt, wenn die Transparenzinformationen in einem aktivierten Zustand sind,
wobei die Transparenzinformationen in den aktivierten Zustand versetzt werden, wenn die Zeigevorrichtung innerhalb der PIP-Region positioniert ist.

2. Display-Vorrichtung nach Anspruch 1, wobei die Steuerung den Bildschirm der PIP-Region vom semitransparenten Zustand in den opaken Zustand wechselt, wenn die Transparenzinformationen im deaktivierten Zustand sind,
wobei die Transparenzinformationen in einen deaktivierten Zustand versetzt werden, wenn die Zeigevorrichtung nicht innerhalb der PIP-Region positioniert ist.

3. Informationsverarbeitungsvorrichtung zum Bereitstellen einer Bild-im-Bild(PIP)-Funktion, aufweisend:
eine Kommunikationsvorrichtung, die Positionsinformationen einer PIP-Region von einer Display-Vorrichtung empfängt und Transparenzinformationen, welche einen Bildschirm der PIP-Region demgemäß, ob eine Zeigevorrichtung innerhalb der PIP-Region positioniert ist, in einen semitransparenten Zustand wechseln, an die Display-Vorrichtung sendet; und
eine PIP-Überwachungseinheit, die einen Zustand der Transparenzinformationen demgemäß festlegt, ob die Zeigevorrichtung innerhalb der PIP-Region positioniert ist,
wobei die Transparenzinformationen in den aktivierten Zustand versetzt werden, wenn die Zeigevorrichtung innerhalb der PIP-Region positioniert ist, und der Bildschirm der PIP-Region von einem opaken Zustand in den semitransparenten Zustand versetzt wird, wenn die Transparenzinformationen im aktivierten Zustand sind.

4. Informationsverarbeitungsvorrichtung nach Anspruch 3, ferner aufweisend einen Zeigevorrichtungsverwalter, der eine Position der Zeigevorrichtung überwacht und Positionsinformationen der Zeigevorrichtung an die PIP-Überwachungseinheit liefert.

5. Informationsverarbeitungsvorrichtung nach Anspruch 3, wobei die PIP-Überwachungseinheit die Transparenzinformationen in einen deaktivierten Zustand versetzt, wenn die Zeigevorrichtung nicht innerhalb der PIP-Region positioniert ist, und der Bildschirm der PIP-Region vom semitransparenten Zustand in den opaken Zustand versetzt wird, wenn die Transparenzinformationen im deaktivierten Zustand sind.

6. Informationsverarbeitungsvorrichtung nach Anspruch 3, wobei die Kommunikationsvorrichtung die Transparenzinformationen an die Display-Vorrichtung sendet, wenn der Zustand der Transparenzinformationen gewechselt wird.

7. Informationsverarbeitungsvorrichtung nach Anspruch 5, ferner aufweisend:
eine Steuerung, die Transparenzinformationen festlegt, welche einen Bildschirm einer PIP-Region demgemäß, ob eine Zeigevorrichtung innerhalb der PIP-Region positioniert ist, in einen semitransparenten Zustand oder einen opaken Zustand wechseln, und eine Display-Einheit steuert, um zu bewirken, dass der Bildschirm der PIP-Region semitransparent ist, wenn die Transparenzinformationen in einen aktivierten Zustand versetzt sind, und opak ist, wenn die Transparenzinformationen in einen deaktivierten Zustand versetzt sind; und
die Display-Einheit, die den Bildschirm der PIP-Region gemäß dem aktivierten/deaktivierten Zustand der Transparenzinformationen im semitransparenten Zustand oder im opaken Zustand ausgibt.

8. Anzeigeverfahren zur Bereitstellung einer Bild-im-Bild(PIP)-Funktion, aufweisend:
Senden von PIP-Informationen, die PIP-EIN-/AUS-Informationen und PIP-Regionsinformationen aufweisen, an eine Bildverarbeitungsvorrichtung;
Empfangen von Transparenzinformationen, die demgemäß festgelegt sind, ob eine Zeigevorrichtung innerhalb einer PIP-Region positioniert ist, von der Informationsverarbeitungsvorrichtung; und
Wechseln eines Bildschirms der PIP-Region von einem opaken Zustand in einen semitransparenten Zustand, wenn die Transparenzinformationen in einem aktivierten Zustand sind,
wobei die Transparenzinformationen in den aktivierten Zustand versetzt werden, wenn die Zeigevorrichtung innerhalb der PIP-Region positioniert ist.

9. Anzeigeverfahren nach Anspruch 8, wobei das Wechseln des Bildschirms der PIP-Region vom semitransparenten Zustand in den opaken Zustand erfolgt, wenn die Transparenzinformationen im deaktivierten Zustand sind,
wobei die Transparenzinformationen in den deaktivierten Zustand versetzt werden, wenn die Zeigevorrichtung nicht innerhalb der PIP-Region positioniert ist.

10. Informationsverarbeitungsverfahren zur Bereitstellung einer Bild-im-Bild(PIP)-Funktion, aufweisend:
Empfangen von Positionsinformationen einer PIP-Region von einer Display-Vorrichtung;
Festlegen von Transparenzinformationen, welche einen Bildschirm der PIP-Region demgemäß, ob eine Zeigevorrichtung innerhalb der PIP-Region positioniert ist, in einen semitransparenten Zustand wechseln; und
Senden der festgelegten Transparenzinformationen an die Display-Vorrichtung,
wobei die Transparenzinformationen in den aktivierten Zustand versetzt werden, wenn die Zeigevorrichtung innerhalb der PIP-Region positioniert ist, und der Bildschirm der PIP-Region von einem opaken Zustand in den semitransparenten Zustand versetzt wird, wenn die Transparenzinformationen im aktivierten Zustand sind.

11. Informationsverarbeitungsverfahren nach Anspruch 10, wobei das Festlegen der Transparenzinformationen ein kontinuierliches Überwachen einer Position der Zeigevorrichtung und Bereitstellen von Positionsinformationen der Zeigevorrichtung aufweist.

12. Informationsverarbeitungsverfahren nach Anspruch 10, aufweisend ein Versetzen der Transparenzinformationen in einen deaktivierten Zustand, wenn die Zeigevorrichtung nicht innerhalb der PIP-Region positioniert ist, wobei der Bildschirm der PIP-Region vom semitransparenten Zustand in den opaken Zustand gewechselt wird, wenn die Transparenzinformationen im deaktivierten Zustand sind.

13. Informationsverarbeitungsverfahren nach Anspruch 10, wobei das Senden der festgelegten Transparenzinformationen ein Senden der Transparenzinformationen an die Display-Vorrichtung aufweist, wenn der Zustand der Transparenzinformationen gewechselt wird.

14. Informationsverarbeitungsverfahren nach Anspruch 12, aufweisend:
Festlegen von Transparenzinformationen, welche einen Bildschirm einer PIP-Region demgemäß, ob eine Zeigevorrichtung innerhalb der PIP-Region positioniert ist, in einen semitransparenten Zustand oder einen opaken Zustand wechseln; und
Steuern einer Display-Einheit, um zu bewirken, dass der Bildschirm der PIP-Region semitransparent ist, wenn die Transparenzinformationen in einen aktivierten Zustand versetzt sind, und opak ist, wenn die Transparenzinformationen in einen deaktivierten Zustand versetzt sind.

## Revendications

1. Appareil d'affichage destiné à fournir une fonction d'image dans l'image (PIP, Picture In Picture), comprenant :
un communicateur transmettant des informations PIP contenant des informations d'activation/désactivation du PIP et des informations de région PIP à un appareil de traitement d'informations et recevant de l'appareil de traitement d'informations des informations de transparence réglées selon qu'un dispositif de pointage est ou non positionné à l'intérieur d'une région PIP ; et
une unité de commande recevant les informations de transparence du communicateur et modifiant un écran de la région PIP pour le faire passer d'un état opaque à un état semi-transparent lorsque les informations de transparence sont dans un état d'activation,
dans lequel les informations de transparence sont réglées dans l'état d'activation lorsque le dispositif de pointage est positionné à l'intérieur de la région PIP.

2. Appareil d'affichage selon la revendication 1, dans lequel l'unité de commande fait passer l'écran de la région PIP de l'état semi-transparent à l'état opaque lorsque les informations de transparence sont dans l'état de désactivation,
dans lequel les informations de transparence sont réglées dans l'état de désactivation lorsque le dispositif de pointage n'est pas positionné à l'intérieur de la région PIP.

3. Appareil de traitement d'informations destiné à fournir une fonction d'image dans l'image (PIP), comprenant :
un communicateur recevant d'un appareil d'affichage des informations de position d'une région PIP, et transmettant à l'appareil d'affichage des informations de transparence qui font passer un écran de la région PIP dans un état semi-transparent selon qu'un dispositif de pointage est ou non positionné à l'intérieur de la région PIP ; et
une unité de surveillance PIP réglant un état des informations de transparence selon que le dispositif de pointage est ou non positionné à l'intérieur de la région PIP,
dans lequel les informations de transparence sont réglées dans l'état d'activation lorsque le dispositif de pointage est positionné à l'intérieur de la région PIP et l'écran de la région PIP est amené à passer d'un état opaque à l'état semi-transparent lorsque les informations de transparence sont à l'état d'activation.

4. Appareil de traitement d'informations selon la revendication 3, comprenant en outre un gestionnaire de dispositif de pointage surveillant une position du dispositif de pointage et fournissant des informations de position du dispositif de pointage à l'unité de surveillance du PIP.

5. Appareil de traitement d'informations selon la revendication 3, dans lequel l'unité de surveillance du PIP positionne les informations de transparence à un état de désactivation lorsque le dispositif de pointage n'est pas positionné à l'intérieur de la région PIP et l'écran de la région PIP est amené à passer de l'état semi-transparent à l'état opaque lorsque les informations de transparence sont à l'état de désactivation.

6. Appareil de traitement d'informations selon la revendication 3, dans lequel le communicateur transmet les informations de transparence à l'appareil d'affichage lorsque l'état des informations de transparence est modifié.

7. Appareil de traitement d'informations selon la revendication 5, comprenant en outre :
une unité de commande réglant des informations de transparence qui font passer un écran d'une région PIP à un état semi-transparent ou à un état opaque selon qu'un dispositif de pointage est ou non positionné à l'intérieur de la région PIP, et commandant une unité d'affichage pour rendre transparent l'écran de la région PIP transparent lorsque les informations de transparence sont réglées dans un état d'activation et
pour le rendre opaque lorsque les informations de transparence sont réglées dans l'état de désactivation ; et
l'unité d'affichage fournissant en sortie l'écran de la région PIP à l'état semi-transparent ou à l'état opaque en fonction de l'état d'activation/de désactivation des informations de transparence.

8. Procédé d'affichage destiné à fournir une fonction d'image dans l'image (PIP), comprenant :
la transmission, à un appareil de traitement d'informations, d'informations PIP contenant des informations d'activation/de désactivation du PIP et des informations de région PIP ;
la réception, en provenance de l'appareil de traitement d'informations, d'informations de transparence définies en fonction du fait qu'un dispositif de pointage est ou non positionné à l'intérieur d'une région PIP ; et
le fait de faire passer un écran de la région PIP d'un état opaque à un état semi-transparent lorsque les informations de transparence sont dans un état d'activation,
dans lequel les informations de transparence sont réglées dans l'état d'activation lorsque le dispositif de pointage est positionné à l'intérieur de la région PIP.

9. Procédé d'affichage selon la revendication 8, dans lequel le passage de l'écran de la région PIP de l'état semi-transparent à l'état opaque se produit lorsque les informations de transparence sont dans l'état de désactivation,
dans lequel les informations de transparence sont réglées à l'état de désactivation lorsque le dispositif de pointage n'est pas positionné à l'intérieur de la région PIP.

10. Procédé de traitement d'informations destiné à fournir une fonction d'image dans l'image (PIP), comprenant :
la réception d'informations de position d'une région PIP en provenance d'un appareil d'affichage ;
le réglage d'informations de transparence, qui font passer un écran de la région PIP à l'état semi-transparent selon qu'un dispositif de pointage est ou non positionné à l'intérieur de la région PIP ; et
la transmission des informations de transparence réglées à l'appareil d'affichage,
dans lequel les informations de transparence sont réglées à l'état d'activation lorsque le dispositif de pointage est positionné à l'intérieur de la région PIP et l'écran de la région PIP est amené à passer d'un état opaque à l'état semi-transparent lorsque les informations de transparence sont réglées dans l'état d'activation.

11. Procédé de traitement d'informations selon la revendication 10, dans lequel le réglage des informations de transparence comprend la surveillance continue d'une position du dispositif de pointage et la fourniture d'informations de position du dispositif de pointage.

12. Procédé de traitement d'informations selon la revendication 10, comprenant le réglage des informations de transparence dans un état de désactivation lorsque le dispositif de pointage n'est pas positionné à l'intérieur de la région PIP et dans lequel l'écran de la région PIP est amené à passer de l'état semi-transparent à l'état opaque lorsque les informations de transparence sont dans un état de désactivation.

13. Procédé de traitement d'informations selon la revendication 10, dans lequel la transmission des informations de transparence réglées comprend la transmission des informations de transparence à l'appareil d'affichage lorsque l'état des informations de transparence est modifié.

14. Procédé de traitement d'informations selon la revendication 12, comprenant :
le réglage d'informations de transparence qui font passer un écran d'une région PIP à un état semi-transparent ou à un état opaque selon qu'un dispositif de pointage est ou non positionné à l'intérieur de la région PIP ; et
la commande d'une unité d'affichage pour rendre semi-transparent l'écran de la région PIP lorsque les informations de transparence sont réglées dans un état d'activation et la rendre opaque lorsque les informations de transparence sont réglées dans l'état de désactivation.
